# EUROPÄISCHE PATENTANMELDUNG

(11) **EP 3 367 281 A1**
(43) Veröffentlichungstag der Anmeldung: **29.08.2018**
(21) Anmeldenummer: 18000189.3
(22) Anmeldetag: 26.02.2018
(51) Int. Cl.: G06F 21/32, G06Q 10/00

(54) **VERFAHREN ZUR VERIFIZIERUNG DER IDENTITÄT EINES NUTZERS**

(30) Priorität: 27.02.2017 DE 102017001879
(71) Anmelder: Giesecke+Devrient Mobile Security GmbH, 81677 München (DE)
(72) Erfinder: Böckel, Gerald, 85435 Erding (DE); Kugler, René, 81475 München (DE); Gründel, Claus, 80796 München (DE)

(57) **Zusammenfassung**

Die Erfindung schafft ein Verfahren zum kontrollierten Verifizieren der Identität eines Nutzers (N) unter Verwendung eine Identitätsdokuments (ID) mittels Video-Ident oder/und Chipauslesen oder optischem Auslesen, das eine Plausibilitätsprüfung umfasst, bei der zumindest ermittelt wird, ob ein Nutzer (N) existiert.

## Beschreibung

### Gebiet der Erfindung

Die Erfindung betrifft ein Verfahren zur Verifizierung der Identität eines Nutzers anhand eines Identitätsdokuments des Nutzers. Insbesondere betrifft die Erfindung ein Verfahren zur Verifizierung der Identität eines Nutzers, bei dem die Identität auch oder ausschließlich durch Video-Verifizierung verifiziert wird, wobei mit einer Bildaufnahme-Einrichtung, insbesondere einer Videoaufnahme-Einrichtung, eine Bild- bzw. Videoaufnahme des Identifikationsdokuments aufgenommen wird und anhand der Bild- bzw. Videoaufnahme die Identität verifiziert wird.

### Stand der Technik

Als Identitätsdokument wird im Zusammenhang mit der Erfindung beispielsweise verstanden: ein Reisepass, ein Personalausweis, eine Identitätskarte. Das Identitätsdokument kann jeweils auch gestaltet sein als elektronisches Identitätsdokument, das einen auslesbaren Chip aufweist, in dem Identitätsdaten des Nutzers gespeichert sind. Regelmäßig sind auf dem Identitätsdokument Identitätsdaten des Nutzers optische lesbare Identitätsdaten aufgebracht, z.B. aufgedruckt.

Die Identität eines Nutzers lässt sich anhand eines Identitätsdokuments des Nutzers verifizieren, indem Identitätsdaten von oder aus dem Identitätsdokument gelesen werden, z.B. von einer Oberfläche des Identitätsdokuments optisch gelesen werden oder/und aus einem Chip des Identitätsdokuments elektronisch ausgelesen werden.

Ein Verfahren zur Video-Verifizierung der Identität eines Nutzers anhand eines Identitätsdokuments des Nutzers ist in Deutschland generell unter der Bezeichnung Video-Ident Verfahren bekannt und bietet eine Alternative zum Postident-Verfahren, bei dem ein Nutzer seine Identität in einer Postfiliale anhand eines Identitätsdokuments verifizieren lässt.

Beim Video-Ident Verfahren erfolgt eine Identifizierung eines Nutzers anhand seines Identitätsdokuments in Echtzeit per Videotelefonat, das der Nutzer mit einem Callcenter-Mitarbeiter durchführt. Das Videotelefonat erfolgt mittels eines Endgeräts, z.B. Smartphone, Tablet PC oder Notebook. Auf dem Endgerät ist vorab eine Video-Ident App zu installieren. Das Endgerät muss weiter internetfähig sein und eine Bildaufnahme-Einrichtung besitzen, z.B. eine Webcam oder eine Smartphone-Kamera. Zudem benötigt der Nutzer ein Mobilfunkgerät (Mobiltelefon, Smartphone, ggf. dasselbe Smartphone das für das Videotelefonat verwendet wird), um im Lauf des Verfahrens einen Ident-Code zu empfangen. Vom Grundsatz her startet der Nutzer die Video-Ident App und wird in ein Videotelefonat mit dem Callcenter-Mitarbeiter verbunden. Zudem gibt der Nutzer Nutzerdaten wie z.B. Name und ggf. Geburtsdatum an, um kenntlich zu machen, wer zu identifizieren ist. Weiter hält der Nutzer sein Identitätsdokument, z.B. einen Personalausweis oder Reisepass, in die Bildaufnahmeeinrichtung (Webcam, Smartphone-Kamera) und lässt Identitätsdaten wie Name, Geburtsdatum, Bild etc. und ggf. Echtheitsmerkmale vom Identitätsdokument ablesen. Ein Callcenter-Mitarbeiter instruiert bedarfsweise den Nutzer, wie er das Identitätsdokument in die Bildaufnahmeeinrichtung zu halten hat. Die gelesenen Identitätsdaten und ggf. Echtheitsmerkmale werden über eine Internet-Verbindung an einen Server gesendet, auf den der Callcenter-Mitarbeiter Zugriff hat, und vom Callcenter-Mitarbeiter überprüft. Z.B. wird der genannte Name des Nutzers mit dem Namen aus dem Identitätsdokument verglichen, oder/und ein Bild aus dem Identitätsdokument mit dem Videobild des anwesenden Nutzers verglichen. Nach erfolgreicher Verifizierung wird an das Mobilfunkgerät des Nutzers ein Ident-Code versandt, den der Nutzer wiederum zurück an den Server sendet. Damit gilt die Identität des Nutzers als verifiziert.

Das Dokument WO 2015/039646 A1 der WebID Solutions GmbH offenbart ein Verfahren zum Auswerten eines Personenidentifikationsdokuments mittels Bildaufnahme des Dokuments. Bei dem Verfahren wird eine Abbildung des Dokuments mittels einer Bildaufnahmeeinrichtung aufgenommen. Die Abbildung wird mittels einer Bilddatenverbindung an eine Datenverarbeitungseinrichtung übertragen. Anhand des Abbilds wird das Dokument ausgewertet, und das Ergebnis der Auswertung zusammen mit einer Vorgangsidentifikationsnummer in einer Datenbank der Datenverarbeitungseinrichtung abgespeichert.

Das Dokument DE 102015206623 A1 der IDnow GmbH offenbart ein Verfahren zum digitalen Signieren eines Dokuments umfassend ein Empfangen von Bilddaten, die ein Identifizierungs-Dokument mit einem Lichtbild eines Benutzers abbilden, von einem Endgerät des Benutzers, Validieren von Identifizierungsinformation des Benutzers basierend auf den Bilddaten, und Signaturerstellung basierend auf der validierten Identifizierungsinformation.

Die aus dem Stand der Technik bekannten Verfahren erlauben eine Verifizierung eines Nutzers, der ein Identitätsdokument vorweisen kann, über Bildaufnahme. Die Verifizierung der Identität über Bildaufnahme wäre auch mit einem gefälschten Identitätsdokument durchführbar, oder mit einem Identitätsdokument, das auf einen nicht-existierenden Nutzer ausgestellt ist, sofern vom Nutzer genannter Name und im bzw. auf dem Identitätsdokument enthaltener Name übereinstimmen.

### Zusammenfassung der Erfindung

Der Erfindung liegt die Aufgabe zu Grunde, ein Verfahren zur Video-Verifizierung der Identität eines Nutzers anhand eines Identitätsdokuments des Nutzers zu schaffen, das einen verbesserten Schutz gegen Verifizierungen mit gefälschten Identitätsdokumenten gewährleistet.

Die Aufgabe wird gelöst durch ein Verfahren nach Anspruch 1. Vorteilhafte Ausgestaltungen der Erfindung sind in den abhängigen Ansprüchen angegeben.

Anspruch 1 lehrt vom Grundsatz her ein Verfahren, einen Nutzer, der sich mit Nutzerdaten zur Identifizierung anmeldet, anhand seiner Identitätsdaten gemäß seinem Identitätsdokument zu identifizieren. Die Identitätsdaten können dabei mittels - bevorzugt kontaktlosem, alternativ oder zusätzlich kontaktbehaftetem - Chipartenleser, Video-Bildaufnahme-Einrichtung (Videokamera) oder einer Kombination von Video-Bildaufnahme-Einrichtung und Chipkartenleser aus dem Identitätsdokument gelesen werden.

Das Verfahren nach Anspruch 1 zeichnet sich gegenüber bekannten Identifikationsverfahren wie Video-Ident vor allem durch Schritt b) aus, wonach beim Datenverarbeitungsserver ermittelt wird, ob die Nutzerdaten plausibel sind. Nur falls die Nutzerdaten plausibel sind, wird die eigentliche Identifizierung durchgeführt, andernfalls das Verfahren abgebrochen, oder der unplausible Identifizierungsantrag an Behörden wie Polizei oder Meldeämter gemeldet. Speziell wird geprüft, ob ein Nutzer gemäß den vom Nutzer angegebenen Nutzerdaten überhaupt existiert. Gefälschte, aber auf den ersten Blick echt aussehende, Identitätsdokumente mit fiktiven Identitäten, zu Nutzern, die überhaupt nicht existieren, erlauben keine Nutzeridentifikation.

Daher ist gemäß Anspruch 1 ein Verfahren zur Nutzeridentifikation geschaffen, das einen verbesserten Schutz gegen Verifizierungen mit gefälschten Identitätsdokumenten gewährleistet.

Im Fall, dass die Identitätsdaten - zumindest auch - per Videokamera vom Identitätsdokument gelesen werden, und zudem ein Bild des echten Nutzers per Video-Bildaufnahme-Einrichtung (Videokamera) erfasst wird, prüft der Datenverarbeitungsserver oder ein Call-Center-Mitarbeiter, der den Datenverarbeitungsserver bedient, bevorzugt, ob Bild und echter Nutzer dieselbe Person darstellen, die bei bekannten Video-Ident-Verfahren üblich.

Wahlweise werden die Identitätsdaten - zumindest auch aus einem in dem Identitätsdokument integrierten Chip ausgelesen und an den Datenverarbeitungsserver gesendet. Bedarfsweise wird zum Auslesen des Chips ein vorheriges optisches Lesen einer maschinenlesbaren Zone MRZ des Identitätsdokuments durchgeführt, und zwar mittels der Video-Bildaufnahme-Einrichtung. Das Lesen der maschinenlesbaren Zone kann gleichzeitig mit dem Video-Aufnehmen des echten Nutzers und der aufgedruckten Identitätsdate von der Oberseite des Identitätsdokuments erfolgen. Die Daten aus der maschinenlesbaren Zone des Identitätsdokuments werden an den Datenverarbeitungsserver gesendet, beim Datenverarbeitungsserver ausgewertet und verwendet, um den Zugriff auf den Chip zu ermöglichen.

Die Identitätsdaten werden beispielsweise unter einem schlüsselbasierten kryptographischen Protokoll wie PACE oder BAC aus dem Chip ausgelesen. Dabei wird beispielsweise beim Datenverarbeitungsserver DVS1 ein kryptographischer Schlüssel zum Zugriff auf den Chip abgeleitet und an den Kartenleser gesendet.

Der Datenverarbeitungsserver kann eine Mehrzahl von Einzel-Servern umfasst, die jeweils unterschiedliche Teilverfahren des Verfahrens durchführen.

Als Identitätsdokument ist z.B. eines der folgenden vorgesehen: ein Reisepass, ein Personalausweis, eine Identitätskarte, auf dem Identitätsdaten eines Nutzers, und ggf. ein Bild des Nutzers, auf einer Oberfläche oder auf mehreren Oberflächen des Identitätsdokuments ausgedruckt oder anderweitig aufgebracht sind; ggf. jeweils gestaltet als elektronisches Identitätsdokument, das zusätzlich einen auslesbaren Chip aufweist, in dem Identitätsdaten, und ggf. ein Bild, des Nutzers gespeichert sind.

Als Nutzerdatenbank ist beispielsweise vorgesehen: ein Behörden-Datenbank, die als Nutzerdaten Personen-Informationen zu bei einer Behörde gemeldeten Personen enthält; eine Soziale-Netzwerke-Datenbank, die Personen-Information zu in einem computerisierten Sozialen Netzwerk (z.B. Facebook oder dergleichen) gemeldeten Personen enthält.

Wahlweise werden zusätzlich ausgelesene Identitätsdaten mit bei der Anmeldung entgegengenommenen Nutzerdaten auf Übereinstimmung vergliche. Bewerten des Nutzers erfolgt als nicht identifiziert, falls gemäß die Identitätsdaten und die Nutzerdaten nicht übereinstimmen.

Die Nutzerdaten werden über eine Nutzerdatenverbindung an den Datenverarbeitungsserver gesendet, z.B. über Internet-Verbindung (Nutzerdateneingabe am PC), Mobilfunkschnittstelle oder WLAN+Internet etc. (Nutzerdateneingabe am Smartphone mittels Tastatur, Spracheingabe etc.) oder Telefonleitung (sprachliche telefonische Eingabe der Nutzerdaten)

### Kurze Beschreibung der Zeichnungen

Im Folgenden wird die Erfindung an Hand von Ausführungsbeispielen und unter Bezugnahme auf die Zeichnungen näher erläutert, in der zeigt:

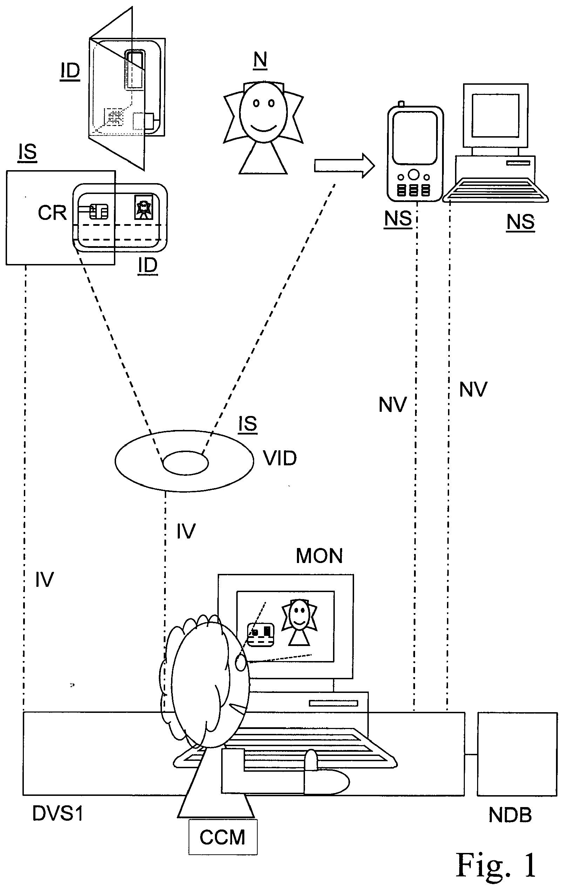

Fig. 1 ein Identifikations-System zur Veranschaulichung der Erfindung.

### Detaillierte Beschreibung von Ausführungsbeispielen

Fig. 1 zeigt ein Identifikations-System zur Veranschaulichung der Erfindung. Mit dem System lässt sich ein erfindungsgemäßes Verfahren zum kontrollierten Verifizieren der Identität eines Nutzers N unter Verwendung eines Identitätsdokuments ID des Nutzers durchführen.

Das Verfahren wird durchgeführt zwischen einem Nutzer N, und einem Call-Center-Mitarbeiter CCM. Der Call-Center-Mitarbeiter CSM hat Zugriff auf einen Datenverarbeitungsserver DVS1, einen Monitor MON, auf dem er Video-Aufzeichnungen des Nutzers N und des Identitätsdokuments ID betrachten kann, und erfindungsgemäß zudem auf eine Nutzerdatenbank NDB. Der Nutzer hat ein Schnittstellengerät mit Nutzerschnittstelle NS und eine Identitätsdatenschnittstelle IS zur Verfügung. Die Nutzerschnittstelle ist z.B. eine Tastatur, Touch-Display, Mikrophon etc. an einem PC Smartphone des Nutzers, oder ein Telefon. Die Identitätsdatenschnittstelle IS umfasst ein Chipkarten-Lesegerät CR, mit dem Identitätsdaten aus einem Chip des Identitätsdokuments ID ausgelesen werden können, oder eine Videokamera VID, oder bevorzugt beides (Kartenleser CR und Videokamera VID).

Das Verfahren umfasst folgende Schritte. Der Nutzer N, der sich identifizieren lassen möchte, kontaktiert das Call-Center, beispielsweise durch Telefonanruf, und wird vom Call-Center-Mitarbeiter CCM aufgefordert, anzugeben, wer identifiziert werden soll.
a) Der Nutzer N gibt über die Nutzerschnittstelle zumindest seinen Namen, ggf. zusätzlich sein Geburtsdatum, als Nutzerdaten ein. Dies kann über z.B. Tastatur, Touch-Display, Mikrofon etc. eines PC oder Smartphone des Nutzers erfolgen, oder telefonisch. Die Nutzerdaten werden an den Datenverarbeitungsserver DVS1 des Call-Centers übertragen, bei PC/Smartphone Eingabe direkt, bei telefonischer Eingabe mit zusätzlicher Eingabe (Eintippen) durch den Call-Center-Mitarbeiter CCM.
b) Gemäß der Erfindung wird beim Datenverarbeitungsserver DVS1 ermittelt, ob die Nutzerdaten ND plausibel sind. Hierzu wird unter Zugriff auf eine Nutzerdatenbank NDB ermittelt, ob ein Nutzer N gemäß den Nutzerdaten existiert. Die Plausibilitätsprüfung umfasst zumindest eine Nutzer-Existenz-Prüfung. Daneben können weitere Plausibilitätstest durchgeführt werden. Konkret führt beispielsweise der Call-Center-Mitarbeiter eine Abfrage in der Nutzerdatenbank NDB durch und prüft, ob der Nutzer N existiert, und ggf. zusätzlich anderweitig, ob die Nutzerdaten plausibel sind. Alternativ führt der Datenverarbeitungsserver DVS1 automatisierte Plausibilitätsabfragen in ein oder mehreren Nutzerdatenbanken durch und liefert das Ergebnis der Abfragen an des Datenverarbeitungsserver DVS1.
   b1) Im Fall, dass ermittelt wird, dass der Nutzer N nicht existiert, oder die Nutzerdaten anderweitig nicht-plausibel sind, wird das Verfahren zum Verifizieren abgebrochen, oder eine Fehlerbehandlungsmaßnahme ohne Verifizieren der Identität veranlasst, z.B. an eine Behörde gemeldet, dass ein nichtexistenter Nutzer versucht hat, sich identifizieren zu lassen.
   b2) Im Fall, dass ermittelt wird, dass der Nutzer N existiert, und ggf. die Nutzerdaten anderweitig als plausibel ermittelt werden, wird das Verfahren weitergeführt mit Schritt c).
c) Nun liest der Nutzer N sein Identitätsdokument ID aus. Das Auslesen erfolgt mittels Videokamera VID, oder mittels Kartenleser CR, oder, gemäß den hier beschriebenen Ausführungsformen, kombiniert mittels Videokamera VID, oder Kartenleser CR.

Zuerst hält der Nutzer N sein Identifikationsdokument ID in die Videokamera VID. Diese macht eine Videoaufnahme vom Identifikationsdokument ID, bzw. im Fall eines Reisepasses von der Datenseite, und vom Nutzer N selbst und sendet die Aufnahme an den Datenverarbeitungsserver DVS1.

Das Identitätsdokument ID bzw. die Datenseite zeigt insbesondere eine maschinenlesbare Zone MRZ und ein Bild des Nutzers N. Der Call-Center-Mitarbeiter CCM vergleicht das Bild vom Identitätsdokument ID mit dem Videobild des echten Nutzers N und vergleicht sie auf Übereinstimmung (dies entspricht der bekannten Vorgehensweise bei bekannten Video-Identifikationsverfahren). Die Daten von der maschinenlesbaren Zone MRZ werden vom Datenverarbeitungsserver DVS1 entgegengenommen. Entweder leitet der Datenverarbeitungsserver DVS1 einen Zugriffsschlüssel zum Zugreifen auf den Chip ab und sendet diesen an den Kartenleser. Alternativ sendet der Datenverarbeitungsserver DVS1 die MRZ-Daten zurück an den Kartenleser CR des Nutzers N, und der Kartenleser CR leitet den Zugriffsschlüssel ab. Der Nutzer liest mit dem Zugriffsschlüssel den Chip seines Identifikationsdokuments ID aus, z.B. gemäß dem BAC- oder PACE-Protokoll für maschinenlesbare Reisedokumente (MRTD). Die aus dem Chip ausgelesenen Identitätsdaten überträgt der Nutzer N an den Datenverarbeitungsserver DVS1.
e) Der Datenverarbeitungsserver DVS1 überprüft die Identitätsdaten auf Gültigkeit. Falls die Identitätsdaten gültig sind, wird der Nutzer als identifiziert bewertet, sofern zuvor nicht noch weitere Überprüfungen erfolgen. Falls die Identitätsdaten nicht gültig sind, wird der Nutzer als nicht identifiziert bewertet.

Weitere Überprüfungen in Schritt e) umfassen beispielsweise eine Überprüfung, ob das Identitätsdokument ID gesperrt. Dann wird der Nutzer N höchstens dann als identifiziert bewertet, falls die Identitätsdaten gültig sind und das Identitätsdokument ID nicht gesperrt ist. Falls die Identitätsdaten nicht gültig sind oder das Identitätsdokument ID gesperrt ist, oder beides, wird der Nutzer als nicht identifiziert bewertet.

## Patentansprüche

1. Verfahren zum kontrollierten Verifizieren der Identität eines Nutzers (N) unter Verwendung eines Identitätsdokuments (ID), mit den Schritten:
a) bei einem Datenverarbeitungsserver (DVS1), Entgegennehmen von durch den Nutzer (N) an einer Nutzerschnittstelle (NS) eingegebenen und über eine Nutzerdaten-Verbindung (NV) von der Nutzerschnittstelle (NS) zum Datenverarbeitungsserver (DVS1) gesendeten Nutzerdaten (ND);
b) beim Datenverarbeitungsserver (DVS1), Ermitteln, ob die Nutzerdaten (ND) plausibel sind, wobei unter Zugriff auf zumindest eine Nutzerdatenbank (NDB) zumindest ermittelt wird, ob ein Nutzer (N) gemäß den Nutzerdaten existiert;
b1) im Fall, dass ermittelt wird, dass der Nutzer (N) nicht existiert, oder die Nutzerdaten anderweitig nicht-plausibel sind, Abbruch des Verfahrens zum Verifizieren oder Veranlassen einer Fehlerbehandlungsmaßnahme ohne Verifizieren der Identität;
b2) im Fall, dass ermittelt wird, dass der Nutzer (N) existiert, und ggf. die Nutzerdaten anderweitig als plausibel ermittelt werden, Weiterführen des Verfahrens mit Schritt c);
c) beim Datenverarbeitungsserver (DVS1), Entgegennehmen von Identitätsdaten von einer Identitätsdaten-Schnittstelle (IS), an welcher die Identitätsdaten, und bedarfsweise weitere Daten, von mindestens einer Oberfläche des Identitätsdokuments (ID) oder / und aus einem in dem Identitätsdokument (ID) integrierten Chip ausgelesen worden sind und über eine Identitätsdaten-Verbindung (IV) an den Datenverarbeitungsserver (DVS1) gesendet worden sind;
d) beim Datenverarbeitungsserver (DVS1), Überprüfen der entgegengenommenen ausgelesenen Identitätsdaten gemäß vorbestimmten Prüfkriterien auf Gültigkeit;
e) beim Datenverarbeitungsserver (DVS1): Bewerten des Nutzers höchstens dann als identifiziert, falls die Identitätsdaten gültig sind; Bewerten des Nutzers als nicht identifiziert, falls die Identitätsdaten nicht gültig sind.

2. Verfahren nach Anspruch 1, wobei
Schritt e) gestaltet ist als: beim Datenverarbeitungsserver (DVS1): Bewerten des Nutzers höchstens dann als identifiziert, falls die Identitätsdaten gültig sind und das Identitätsdokument (ID) nicht gesperrt ist; Bewerten des Nutzers als nicht identifiziert, falls die Identitätsdaten nicht gültig sind oder / und falls das Identitätsdokument (ID) gesperrt ist.

3. Verfahren nach Anspruch 1 oder 2, wobei die Identitätsdaten-Schnittstelle (IS) eine Video-Bildaufnahme-Einrichtung (VID) umfasst, und wobei in Schritt c) als Identitätsdaten auf einer Oberfläche des Identitätsdokuments aufgebrachte Identitätsdaten vorgesehen sind, die mittels der Video-Bildaufnahme-Einrichtung (VID) von der mindestens einen Oberfläche, abgelesen werden.

4. Verfahren nach einem der Ansprüche 1 bis 3,
wobei in Schritt c) durch die Video-Bildaufnahme-Einrichtung (VID):
- ein Abbild eines auf dem Identitätsdokument aufgebrachten Bildes des Nutzers (N) abgelesen wird,
- ein Videobild des Nutzers (N) erfasst wird, und
- das Abbild und das Videobild an den Datenverarbeitungsserver (DVS1) gesendet werden,
und wobei in Schritt d)
- beim Datenverarbeitungsserver (DVS1) das Abbild und das Videobild daraufhin überprüft werden, ob sie den gleichen Nutzer (N) darstellen,
und wobei in Schritt e)
- falls das Abbild und das Videobild nicht den gleichen Nutzer (N) darstellen, die Identitätsdaten als ungültig bewertet werden.

5. Verfahren nach einem der Ansprüche 1 bis 4, wobei die Identitätsdaten-Schnittstelle (IS) umfasst:
- eine Chiplese-Einrichtung (CR), und wobei in Schritt c) als Identitätsdaten in einem in dem Identitätsdokument (ID) integrierten Chip gespeicherte Identitätsdaten vorgesehen sind, die mittels der Chiplese-Einrichtung (CR) aus dem Chip ausgelesen werden.

6. Verfahren nach Anspruch 5, wobei zum Auslesen des Chips in Schritt c) ein vorheriges optisches Lesen einer maschinenlesbaren Zone (MRZ) des Identitätsdokuments erforderlich ist, und wobei die Identitätsdaten-Schnittstelle (IS) zusätzlich eine Video-Bildaufnahme-Einrichtung (VID) oder andere optische Lese-Einrichtung umfasst, und wobei vor Schritt c) mittels der Video-Bildaufnahme-Einrichtung (VID) oder anderen optischen Lese-Einrichtung Daten aus einer maschinenlesbaren Zone (MRZ) des Identitätsdokuments (ID) ausgelesen werden und an den Datenverarbeitungsserver (DVS1), und beim Datenverarbeitungsserver (DVS1) ausgewertet und verwendet werden, um den Zugriff auf den Chip zu ermöglichen.

7. Verfahren nach Anspruch 6, wobei die Identitätsdaten unter einem schlüsselbasierten kryptographischen Protokoll (PACE, BAC) aus dem Chip ausgelesen werden, und wobei vor Schritt beim Datenverarbeitungsserver (DVS1) ein kryptographischer Schlüssel zum Zugriff auf den Chip abgeleitet wird.

8. Verfahren nach Anspruch 6 oder 7,
wobei in Schritt c):
- durch die Chiplese-Einrichtung (CR) ein im Chip abgespeichertes Bild des Nutzers (N) aus dem Chip ausgelesen wird,
- durch die Video-Bildaufnahme-Einrichtung (VID) ein Videobild des Nutzers (N) erfasst wird, und
- das aus dem Chip ausgelesene Bild und das Videobild an den Datenverarbeitungsserver (DVS1) gesendet werden,
und wobei in Schritt d)
- beim Datenverarbeitungsserver (DVS1) das ausgelesene Bild und das Videobild daraufhin überprüft werden, ob sie den gleichen Nutzer (N) darstellen, und wobei in Schritt e)
- falls das ausgelesene Bild und das Videobild nicht den gleichen Nutzer (N) darstellen, die Identitätsdaten als ungültig bewertet werden.

9. Verfahren nach einem der Ansprüche 1 bis 8, wobei die Nutzerschnittstelle (NS) ein Zeichen-Eingabefeld wie eine Tatstatur oder/und eine Touch-Display umfasst, und wobei die Nutzerdaten durch den Nutzer (N) durch Eingaben der Tatstatur bzw. dem Touch-Display eingegebenen werden.

10. Verfahren nach einem der Ansprüche 1 bis 9, wobei der Datenverarbeitungsserver (DVS1) eine Mehrzahl von Einzel-Servern umfasst, die jeweils unterschiedliche Teilverfahren des Verfahrens durchführen.

11. Verfahren nach einem der Ansprüche 1 bis 10, wobei als Identitätsdokument (ID) eines der folgenden vorgesehen ist: ein Reisepass, ein Personalausweis, eine Identitätskarte, auf dem Identitätsdaten (ID) eines Nutzers (N), und ggf. ein Bild des Nutzers (N), auf einer Oberfläche oder auf mehreren Oberflächen des Identitätsdokuments (ID) ausgedruckt oder anderweitig aufgebracht sind; ggf. jeweils gestaltet als elektronisches Identitätsdokument (ID), das zusätzlich einen auslesbaren Chip aufweist, in dem Identitätsdaten, und ggf. ein Bild, des Nutzers (N) gespeichert sind.

12. Verfahren nach einem der Ansprüche 1 bis 11, wobei als Nutzerdatenbank (NDB) zumindest eine der folgenden vorgesehen ist: ein Behörden-Datenbank, die als Nutzerdaten Personen-Informationen zu bei einer Behörde gemeldeten Personen enthält; eine Soziale-Netzwerke-Datenbank, die Personen-Information zu in einem computerisierten Sozialen Netzwerk gemeldeten Personen enthält.

13. Verfahren nach einem der Ansprüche 1 bis 12, wobei
Schritt d) weiter umfasst: Überprüfen zumindest eines Teils der ausgelesenen Identitätsdaten mit zumindest einem Teil der in Schritt b) entgegengenommenen Nutzerdaten (ND) auf Übereinstimmung; und
Schritt e) umfasst: Bewerten des Nutzers als nicht identifiziert, falls gemäß der Überprüfung in Schritt d) die Identitätsdaten und die Nutzerdaten nicht übereinstimmen.
